# EUROPEAN PATENT SPECIFICATION

(11) **EP 3 954 987 B1**
(45) Date of publication and mention of the grant of the patent: **24.12.2025**
(21) Application number: 20787227.6
(22) Date of filing: 26.02.2020
(51) Int. Cl.: G01N 27/333

(54) **ION-SELECTIVE ELECTRODE AND ELECTROLYTE CONCENTRATION DETERMINATION DEVICE**
IONENSELEKTIVE ELEKTRODE UND VORRICHTUNG ZUR BESTIMMUNG DER ELEKTROLYTKONZENTRATION
ÉLECTRODE SÉLECTIVE D'IONS ET DISPOSITIF DE DÉTERMINATION DE CONCENTRATION D'ÉLECTROLYTE

(30) Priority: 10.04.2019 JP 2019074513
(43) Date of publication of application: 16.02.2022
(73) Proprietor: Hitachi High-Tech Corporation, Minato-ku Tokyo 105-6409 (JP)
(72) Inventor: WATANABE, Yoshito, Tokyo 105-6409 (JP); KISHIOKA, Atsushi, Tokyo 100-8280 (JP); YAMAMOTO, Haruyoshi, Tokyo 100-8280 (JP); MIYAKE, Masafumi, Tokyo 105-6409 (JP)
(74) Representative: MERH-IP Matias Erny Reichl Hoffmann Patentanwälte PartG mbB
(86) International application number: PCT/JP2020/007642
(87) International publication number: WO 2020/208960

(56) References cited:
- JP-A- 2002 071 619
- JP-A- 2007 534 949
- JP-A- 2011 212 937
- JP-A- 2013 513 118
- JP-A- 2016 071 286
- JP-A- S56 150 347
- JP-A- S6 242 046
- US-A1- 2009 218 237
- ANONYMOUS: "Solubility Parameter", 19 April 2023 (2023-04-19), pages 1 - 2, XP093040311, Retrieved from the Internet <URL:https://polymerdatabase.com/polymer%20physics/delta%20Table.html> [retrieved on 20230419]
- NIELSEN, H. J. ET AL.: "New nitrate ion- selective electrodes based on quaternary ammonium compounds in nonporous polymer membranes", ANAL. CHIM. ACTA, vol. 85, 1976, pages 1 - 16, XP055748371, ISSN: 0003-2670

## Description

### Technical Field

The present disclosure relates to an ion-selective electrode and an electrolyte concentration determination device.

### Background Art

A flow-type electrolyte concentration determination device is mounted on a biochemical automatic analyzer, a water quality analyzer, and a soil analyzer, and analyzes an ion concentration in a specimen such as a biological sample such as serum and urine, environmental water, and soil with high accuracy and high throughput. In order to simultaneously analyze a plurality of ions (sodium ion, potassium ion, calcium ion, chloride ion, and the like), a plurality of ion-selective electrodes (ISE) corresponding to the ions to be detected are mounted on an electrolyte concentration determination device as electrolyte concentration determination sensors (PTL 1).

The ion-selective electrode typically includes an electrolyte solution, a casing in which the electrolyte solution is enclosed and a flow path for a solution to be tested is provided, an ion sensitive membrane provided between the electrolyte solution and the solution to be tested, and an electrode rod that determines an electromotive force induced by the ion sensitive membrane.

As a material of the casing, a vinyl chloride resin is used because the electrolyte solution such as an aqueous sodium chloride solution can be stably enclosed for a long time and the vinyl chloride resin can be easily manufactured. As the ion sensitive membrane, a polymer membrane obtained by dissolving, for example, an ion-selective substance, a plasticizer, and polyvinyl chloride in an organic solvent such as tetrahydrofuran and then forming such a solution into a membrane shape is used. The ion sensitive membrane is fixed to the casing by a method such as solvent adhesion using tetrahydrofuran.

For example, PTL 2 discloses "an ion-selective electrode comprising an ion sensitive membrane fixed on a support having a flow path for a solution to be tested, a casing including the support, a first casing member, and a second casing member, an electrode rod fixed to a part of the casing, and an electrolyte solution enclosed in the casing, wherein a material of the casing is a vinyl chloride resin containing polyvinyl chloride as a main component, and contains an organic acid zinc salt and an organic acid metal salt (the metal is one or more of calcium, magnesium, barium, and potassium) " (see Claim 1 of PTL 2).
PTL 3 discloses a lithium ion-selective membrane, including a polymer carrier, a plasticizer, a conductive compound and a lithium ion specific ionophoric compound.
PTL discloses an ion-sensitive film which is formed to one aperture of a cylindrical body consisting of a PVC, polyacetal, etc. of an anion-selective electrode and an internal electrolyte is housed into the body.

### Citation list

### Patent Literature

PTL 1: JP-A-61-124864
PTL 2: JP-A-2016-180630
PTL 3: US 2009218237 A1
PTL 4: JPS6242046 A

### Summary of Invention

### Technical Problem

However, when the casing is formed of the vinyl chloride resin as in the ion-selective electrode described in PTL 2, a plasticizer of the sensitive membrane is likely to transfer to the casing, a composition of the sensitive membrane changes over time, and an electrode performance changes over time. Since the electrode performance changes over time, a storage life of the ion-selective electrode in the related art is about one year, and it is required to further improve stability and extend the storage life.

For the material of the casing, when adhesion between the sensitive membrane and the casing is emphasized, it is preferable that affinity with a sensitive membrane material is high. On the other hand, to reduce transfer of the plasticizer of the sensitive membrane, it is preferable that the affinity with the sensitive membrane material is low. No casing material that achieves both low transfer of the plasticizer of the sensitive membrane and adhesion between the sensitive membrane and the casing, which are in a trade-off relationship, has been found so far.

Therefore, the present disclosure provides a technique of achieving both ion-selective electrode stability and adhesion between a sensitive membrane and a casing.

### Solution to Problem

The invention is set out in the appended set of claims.

More features relevant to the present disclosure will become apparent from the description and the accompanying drawings. Further, aspects of the present disclosure are achieved and implemented by elements, combinations of various elements, the following detailed description, and accompanying claims.

It should be understood that the description of the present specification is merely a typical example, and does not limit the scope of the claims or application examples of the present disclosure in any sense.

### Advantageous Effect

According to the present disclosure, both stability of the ion-selective electrode and adhesion between the sensitive membrane and the casing can be achieved.

Technical problems, configurations, and effects other than those described above will be clarified by the following descriptions of embodiments.

### Brief Description of Drawings

FIG. 1 is a schematic diagram showing an example of a flow-type electrolyte concentration determination device.
FIG. 2 shows a configuration of an ion-selective electrode.
FIG. 3 is a graph showing weight changes of a methyl methacrylate acrylonitrile butadiene styrene resin and a vinyl chloride resin due to immersion in a plasticizer (adipic acid-based).
FIG. 4 is a graph showing a weight relative change rate of the methyl methacrylate acrylonitrile butadiene styrene resin with reference to the vinyl chloride resin.
FIG. 5 is a schematic diagram showing a difference in solubility parameters (SP values).

### Description of Embodiments

An embodiment of the present disclosure will be described below with reference to the accompanying drawings. The accompanying drawings show a specific embodiment consistent with principles of the present disclosure for the understanding of the present disclosure, and are not intended to be construed in a limiting sense.

### <Configuration of Electrolyte Concentration Determination Device>

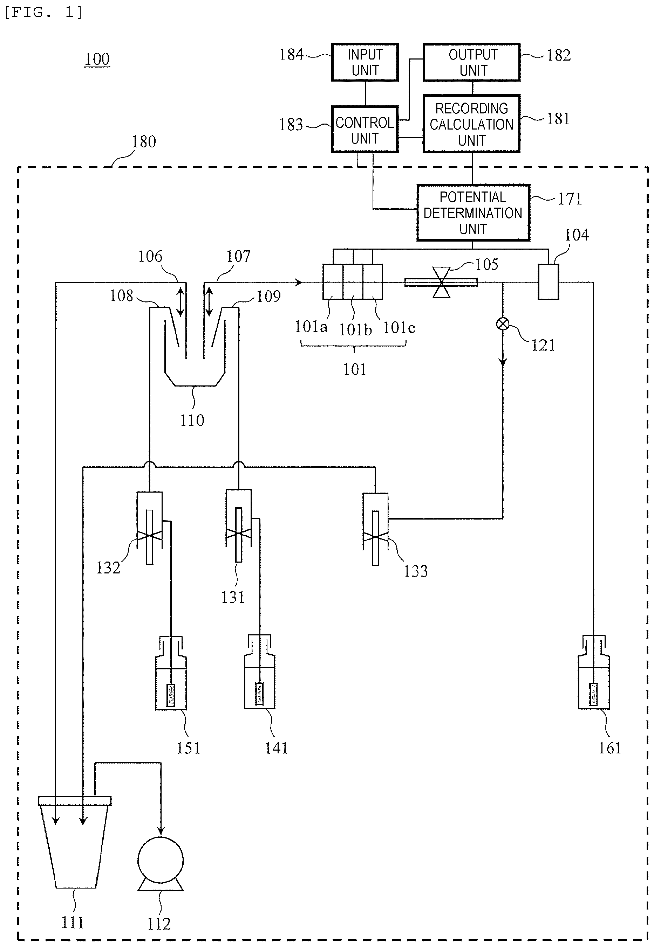

FIG. 1 is a schematic diagram showing an example of a flow-type electrolyte concentration determination device 100. The electrolyte concentration determination device 100 is a device that determines cations and anions in a specimen, and includes a determination unit 180, a recording calculation unit 181, an output unit 182, a control unit 183, and an input unit 184.

The determination unit 180 includes a plurality of ion-selective electrodes 101 (ion-selective electrodes 101a to 101c), a reference electrode 104, a pinch valve 105, a vacuum aspiration nozzle 106, a shipper nozzle 107, a diluent supply nozzle 108, an internal standard solution supply nozzle 109, a dilution tank 110, a waste liquid tank 111, a vacuum pump 112, a switching valve 121, an internal standard solution syringe 131, a diluent syringe 132, a shipper syringe 133, an internal standard solution bottle 141, a diluent bottle 151, a reference electrode solution bottle 161, and a potential determination unit 171. For example, the ion-selective electrode 101a can be a chlorine ion electrode, the ion-selective electrode 101b can be a potassium ion electrode, and the ion-selective electrode 101c can be a sodium ion electrode. The number of the ion-selective electrodes 101 can be changed according to the number of types of ions to be determined. In addition, the ion-selective electrodes 101 are applicable to all ion types.

The reference electrode solution bottle 161 holds a reference electrode solution, and the reference electrode solution is introduced into a flow path of the reference electrode 104 by the shipper syringe 133. As the reference electrode solution, for example, an aqueous potassium chloride solution can be used. The internal standard solution bottle 141 holds an internal standard solution, and the internal standard solution is dispensed into the dilution tank 110 by the internal standard solution syringe 131 and the internal standard solution supply nozzle 109, and is introduced into flow paths of the ion-selective electrodes 101.

The specimen is dispensed into the dilution tank 110 by a sampling mechanism (not shown). The diluent bottle 151 holds a diluent, and the diluent is dispensed into the dilution tank 110 by the diluent syringe 132 and the diluent supply nozzle 108 to be mixed with the specimen, and the specimen diluted with the diluent is introduced into the flow paths of the ion-selective electrodes 101 by the shipper nozzle 107.

The pinch valve 105 prevents the specimen introduced into the flow paths of the ion-selective electrodes 101 from flowing back to a dilution tank 110 side. After analysis in the ion-selective electrodes 101, a liquid in the dilution tank 110 is aspirated from the vacuum aspiration nozzle 6 and discarded in the waste liquid tank 111 by driving the vacuum pump 112.

The reference electrode solution introduced into the reference electrode 104 is discarded in the waste liquid tank 111 by operating the switching valve 121, the vacuum pump 112, and the shipper syringe 133.

A potential difference (electromotive force) between the reference electrode 104 and each ion-selective electrode 101 varies depending on concentrations of ions to be analyzed in the liquid introduced into the flow paths of the ion-selective electrodes 101. The potential determination unit 171 determines the electromotive force and outputs a determination result to the recording calculation unit 181. The recording calculation unit 181 calculates the ion concentration based on the determination result of the recording calculation unit 181. As a method of determining the ion concentration using the electrolyte concentration determination device 100, for example, a method described in PTL 1 can be used.

### <Configuration of Ion-Selective Electrode>

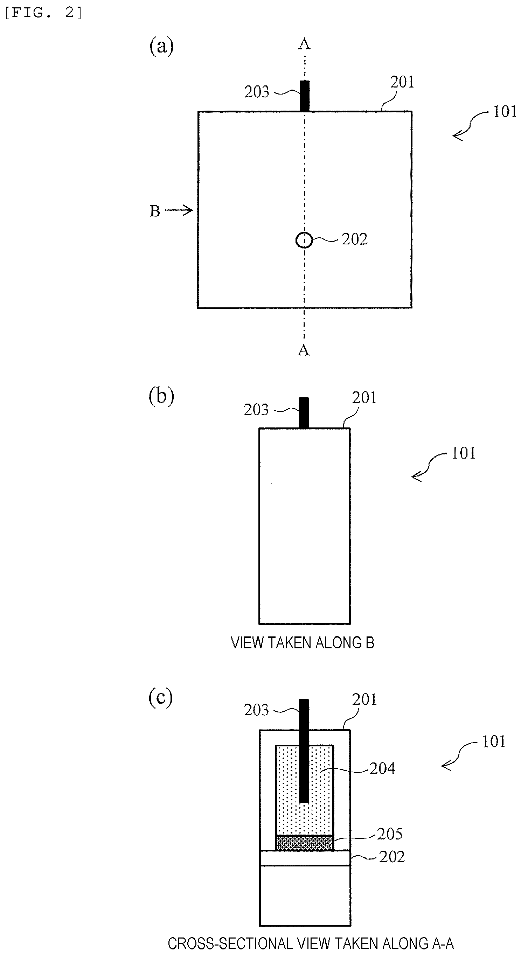

FIG. 2 shows a configuration of the ion-selective electrode 101. FIG. 2(a) is a front view of the ion-selective electrode 101, FIG. 2(b) is a view taken along a B of FIG. 2(a), and FIG. 2(c) is a cross-sectional view taken along A-A of FIG. 2(a). The ion-selective electrode 101 includes a casing 201, a flow path 202, a silver/silver chloride electrode 203, an internal liquid 204, and a sensitive membrane 205. The flow path 202 penetrates the casing 201 in a horizontal direction, and the specimen flows inside the flow path 202. The silver/silver chloride electrode 203 is in contact with the internal liquid 204. The silver/silver chloride electrode 203 also serves as a terminal. As the internal liquid 204, for example, a solution containing an electrolyte such as potassium chloride can be used.

As shown in FIG. 2(c), the sensitive membrane 205 is in contact with the specimen flowing through the flow path 202, and the internal liquid 204 is filled on a side opposite to the flow path 202 via the sensitive membrane 205. The specimen in the flow path 202 and the internal liquid 204 are electrically connected to each other via the sensitive membrane 205. The sensitive membrane 205 takes in ions from the specimen flowing through the flow path 202 and moves the ions to the internal liquid 204. The ion concentration can be calculated based on a potential difference between the electromotive force generated at this time and a potential of the reference electrode 104.

FIG. 2 shows a connection portion between the flow path 202 and the electrolyte concentration determination device 100 in a simplified manner. When the ion-selective electrode 101 is mounted on the electrolyte concentration determination device 100, any structure may be used as long as a flow of the specimen passing through the flow path 202 is not hindered and liquid leakage does not occur.

The sensitive membrane 205 contains a base material, an ion-selective substance, and a plasticizer. The sensitive membrane 205 may contain an ordinary additive to be added to the sensitive membrane 205, such as an anion removing agent or a cation removing agent.

As the base material, any material may be used as long as the material itself does not have ion exchangeability and can maintain the ion-selective substance, the plasticizer, and various additives in a membrane shape, and typically polyvinyl chloride is used. In addition to polyvinyl chloride, as the base material, for example, polyvinylidene chloride, polyaniline, cellulose triacetate, polymethacrylate, polyacrylate, silicone, polyester, polyurethane, polyvinyl alcohol, and epoxy resin may be used alone or in combination.

The ion-selective substance is a substance that binds to specific ions, and is selected according to types of ions to be detected. When the ions to be detected are the cations such as sodium, potassium, calcium, magnesium, and ammonium, for example, crown ether, valinomycin, calixarene, phosphate ester, and nonactin can be used. When the ions to be detected are the anions such as chlorine, carbonate, thiocyanate, nitric acid, hydrofluoric acid, phosphoric acid, sulfuric acid, and iodine, in addition to a membrane containing an ion-selective substance such as a quaternary ammonium salt, silver halide such as silver chloride or silver bromide or an ion exchange membrane can be used.

The plasticizer comprises adipic acid esters such as dioctyl adipate and diisononyl adipate.

The casing 201 and the sensitive membrane 205 are adhered by solvent adhesion using a solvent such as tetrahydrofuran (THF).

The casing 201 is typically formed of a vinyl chloride resin containing polyvinyl chloride as a main component. As described above, the plasticizer is likely to transfer to the vinyl chloride resin, and an electrode performance may change over time. As a result of intensive studies, the inventors have found that the above problem can be solved by using a methyl methacrylate acrylonitrile butadiene styrene resin (MABS resin) as a material of the casing 201.

The methyl methacrylate acrylonitrile butadiene styrene resin is a mixture or a copolymer of methyl methacrylate (PMMA) and acrylonitrile butadiene styrene (ABS). The methyl methacrylate acrylonitrile butadiene styrene resin is excellent in impact resistance and surface hardness, and has high thermal stability and high moldability. In addition, since the methyl methacrylate acrylonitrile butadiene styrene resin has fairly low hygroscopicity, the resin can hold the internal liquid 204 that is the electrolyte solution without absorbing the internal liquid 204.

If necessary, various additives such as a heat stabilizer, a light stabilizer, and a colorant may be added to the methyl methacrylate acrylonitrile butadiene styrene resin.

### (Transfer Test of Plasticizer)

To confirm a transfer degree of the plasticizer to the material of the casing 201, a test sheet of the MABS was prepared in accordance with JIS K7114: 2001 "testing method for obtaining immersion effect in plastic-liquid chemicals", and an immersion test was performed. A size of the test sheet was 60 mm × 60 mm × 1 mm, immersion temperature was 60°C, immersion time was one month at the longest, and an adipic acid-based plasticizer was used as the plasticizer in which the test sheet was immersed. As the test sheet, four types (MABS-1 to MABS-4) having different manufacturers or different model numbers among widely distributed methyl methacrylate acrylonitrile butadiene styrene resins and the vinyl chloride resin (PVC) were used.

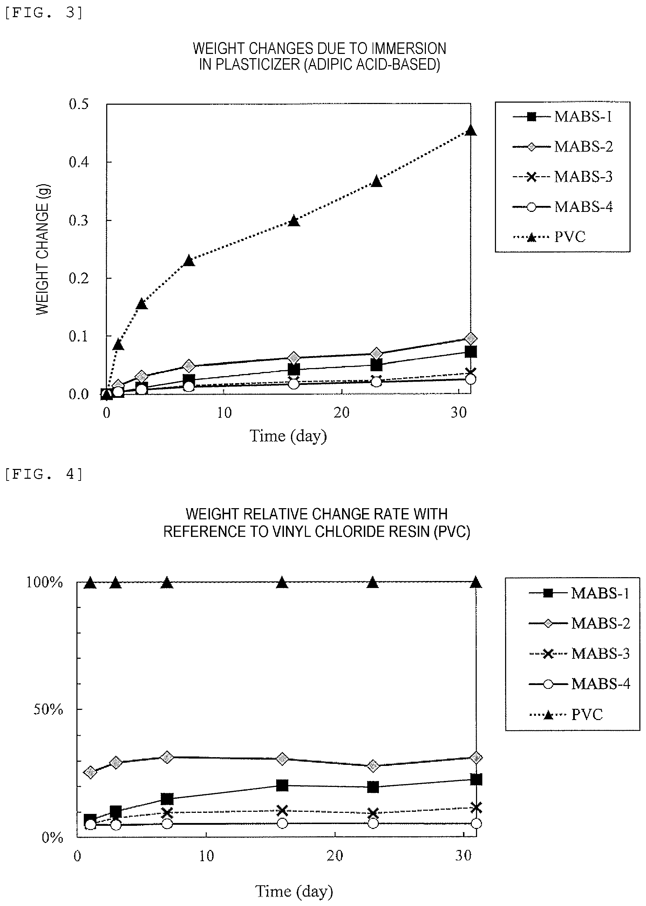

FIG. 3 is a graph showing weight changes of the methyl methacrylate acrylonitrile butadiene styrene resin and the vinyl chloride resin due to immersion in the plasticizer (adipic acid-based). The vinyl chloride resin was increased by 0.45 g in one month, whereas each of the MABS-1 to MABS-4 was increased by 0.1 g or less in one month.

The weight change itself depends on the size of the test sheet and the immersion time. Therefore, to generalize an index that does not depends on the size of the test sheet and the immersion time, a weight relative change rate of the MABS resin with reference to the vinyl chloride resin was calculated.

FIG. 4 is a graph showing the weight relative change rate of the methyl methacrylate acrylonitrile butadiene styrene resin with reference to the vinyl chloride resin. In any of the four types of MABS-1 to MABS-4, the weight relative change rate with reference to the vinyl chloride resin was 40% or less. This indicates that a transfer amount of the adipic acid-based plasticizer to the methyl methacrylate acrylonitrile butadiene styrene resin is 40% or less with reference to the vinyl chloride resin. As described above, it can be seen that the methyl methacrylate acrylonitrile butadiene styrene resin has a smaller transfer amount of the plasticizer than that of the vinyl chloride resin, and can produce an ion-selective electrode having more long-term stability.

### (Adhesion Test of Sensitive Membrane)

Next, it was confirmed whether the sensitive membrane was adhered to the casing when tetrahydrofuran was used as an adhesion solvent. First, a sodium ion-selective electrode and a potassium ion-selective electrode were produced using the methyl methacrylate acrylonitrile butadiene styrene resin as the material of the casing. When an adhesion operation between the casing and the sensitive membrane was performed using tetrahydrofuran, the methyl methacrylate acrylonitrile butadiene styrene resin was appropriately dissolved in tetrahydrofuran and the casing and the sensitive membrane easily adhered, and there was no problem in workability.

When air pressure of 100 kPa was applied to flow paths of the prepared sodium ion-selective electrode and potassium ion-selective electrode, no air leakage was observed. Therefore, it was determined that the casing formed of the methyl methacrylate acrylonitrile butadiene styrene resin was capable of sensitive membrane adhesion with tetrahydrofuran. As described above, it can be seen that when the methyl methacrylate acrylonitrile butadiene styrene resin is used as the material of the casing 201, the adhesion of the sensitive membrane can be implemented similarly to a case where the vinyl chloride resin is used.

Furthermore, the inventors have found that a solubility parameter is useful as an index for determining whether the material of the casing 201 is suitable for the ion-selective electrode 101.

The solubility parameter (SP value) is a value serving as an indication of solubility of a two-component solution, and it is empirically known that the solubility increases as a difference between SP values of the two components decreases.

The SP value includes a solubility parameter of Fedors, a solubility parameter of Hildebrand, a solubility parameter of Hansen, and the like. As the SP value for determining the transfer property between the resin and the plasticizer and the adhesion of the sensitive membrane in the present disclosure, it is more preferable to use the SP value of the solubility parameter of Hildebrand from a viewpoint that the SP value can be comprehensively calculated based on three energy parameters of dispersion, polarization, and hydrogen bond, and the solubility can be determined more accurately. A unit of the solubility parameter (SP value) is (MPa)1/2.

Table 1 shows solubility parameters (SP values) of typical plasticizers. As shown in Table 1, the solubility parameters (SP values) of these plasticizers are 17.4 to 18.4.

**[Table 1]**

| Plasticizer | Solubility parameter (SP value) [MPa]^{1/2} |
|---|---|
| Dioctyl phthalate | 18.2 |
| Diisononyl phthalate | 18.2 |
| Diisodecyl phthalate | 17.6 |
| Dioctyl adipate | 17.8 |
| Diisononyl adipate | 17.4 |
| Trioctyl trimellitate | 18.4 |

According to H. Burrel, J. Brandrup, E. H. Immergut, "Polymer Handbook", Interscience, New York (1966), it is known that the solubility parameter (SP value) of the vinyl chloride resin is 19.19 to 19.34, and the solubility parameter (SP value) of tetrahydrofuran is 21.9.

Here, solubility parameters of the four types of MABS-1 to MABS-4 were measured by a Hansen sphere method. Specifically, first, a target sample was mixed with a solvent having a known solubility parameter, and it was determined whether the sample was dissolved. Next, results of the solubility test were plotted in a three-dimensional space of solubility parameters (δD, δP, δH). Next, a sphere (Hansen sphere) including coordinates of the dissolved solvent and not including coordinates of the undissolved solvent was obtained.

Determination conditions of the solubility parameter were as follows.
Test temperature: room temperature (22°C to 25°C)
Test time: 24 hours

The solubility parameters of the MABS-1 to the MABS-4 were 20.6 to 21.1 as shown in Table 2.

**[Table 2]**

| MABS resin | Solubility parameter (SP value) [MPa]^{1/2} |
|---|---|
| MABS-1 | 21.1 |
| MABS-2 | 20.6 |
| MABS-3 | 20.6 |
| MABS-4 | 20.6 |

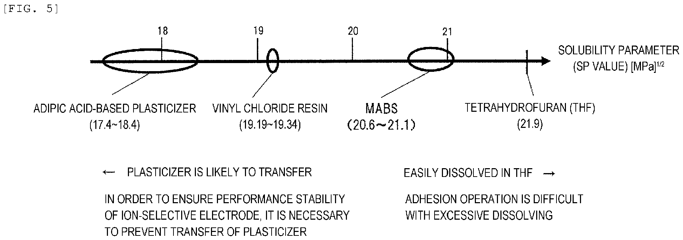

FIG. 5 is a schematic diagram showing solubility parameters (SP values) of the adipic acid-based plasticizer, the vinyl chloride resin, the MABS resin, and tetrahydrofuran. As shown in FIG. 5, it can be seen that, in the sensitive membrane using any plasticizer, by using a substance having the solubility parameter (SP value) in a range of 19.5 to 21.5 in addition to the MABS resin as the material of the casing 201, the ion-selective electrode in which the transfer amount of the plasticizer is small and the performance is stable can be obtained as compared to the case where the vinyl chloride resin is used in the casing. The solubility parameter of the material of the casing 201 may be 20.6 to 21.1 in accordance with conditions, which is similar to the solubility parameter of the MABS resin.

### <Technical Effects>

As described above, in the ion-selective electrode according to the present disclosure, the substance having the solubility parameter (SP value) of 19.5 to 21.5, particularly the MABS resin, is used as the material of the casing. Accordingly, the transfer of the plasticizer contained in the sensitive membrane can be prevented, and both stability and adhesion between the casing and the sensitive membrane can be achieved. Further, since mass production and mass stock are possible due to a long life, the ion-selective electrode can be produced with high efficiency. Further, for a user, it is possible to reduce a frequency of exchange and operation time due to a lifetime of the ion-selective electrode, and thus it is possible to reduce maintenance cost.

### Reference Sign List

- 100: electrolyte concentration determination device
- 101: ion-selective electrode
- 104: reference electrode
- 105: pinch valve
- 106: vacuum aspiration nozzle
- 107: shipper nozzle
- 108: diluent supply nozzle
- 109: internal standard solution supply nozzle
- 110: dilution tank
- 111: waste liquid tank
- 112: vacuum pump
- 121: switching valve
- 131: internal standard solution syringe
- 132: diluent syringe
- 133: shipper syringe
- 141: internal standard solution bottle
- 151: diluent bottle
- 161: reference electrode solution bottle
- 171: potential determination unit
- 180: determination unit
- 181: recording calculation unit
- 182: output unit
- 183: control unit
- 184: input unit
- 201: casing
- 202: flow path
- 203: silver/silver chloride electrode
- 204: internal liquid
- 205: sensitive membrane

## Claims

1. An ion-selective electrode (101) comprising:
a sensitive membrane (205) containing an ion-selective substance, a base material, and an adipic acid ester-based plasticizer; and
a casing (201) holding the sensitive membrane (205),
**characterized in that** the material of the casing (201) is a methyl methacrylate acrylonitrile butadiene styrene resin.

2. The ion-selective electrode according to claim 1, wherein
the casing (201) and the sensitive membrane (205) are adhered to each other inside the casing (201).

3. The ion-selective electrode (101) according to claim 1, wherein
the base material is polyvinyl chloride.

4. An electrolyte concentration determination device comprising the ion-selective electrode (101) according to claim 1.

5. The ion-selective electrode according to claim 1, wherein
the casing has a solubility parameter (SP value) of 20.6 to 21.1 MPa^{1/2}.

## Patentansprüche

1. Ionenselektive Elektrode (101), die Folgendes umfasst:
eine empfindliche Membran (205), die eine ionenselektive Substanz, ein Grundmaterial und einen auf Adipinsäureester beruhenden Weichmacher enthält; und
ein Gehäuse (201), das die empfindliche Membran (205) hält,
**dadurch gekennzeichnet, dass** das Material des Gehäuses (201) ein Methylmethacrylat-Acrylnitril-Butadien-Styrol-Harz ist.

2. Ionenselektive Elektrode nach Anspruch 1, wobei
das Gehäuse (201) und die empfindliche Membran (205) im Inneren des Gehäuses (201) aneinander geklebt sind.

3. Ionenselektive Elektrode (101) nach Anspruch 1, wobei
das Grundmaterial Polyvinylchlorid ist.

4. Elektrolytkonzentrations-Bestimmungsvorrichtung, die die ionenselektive Elektrode (101) nach Anspruch 1 umfasst.

5. Ionenselektive Elektrode nach Anspruch 1, wobei
das Gehäuse einen Löslichkeitsparameter (SP-Wert) im Bereich von 20,6 bis 21,1 MPa^{1/2} aufweist.

## Revendications

1. Électrode sélective d'ions (101) comprenant :
une membrane sensible (205) contenant une substance sélective d'ions, un matériau de base, et un plastifiant à base d'ester d'acide adipique ; et
un boîtier (201) maintenant la membrane sensible (205),
**caractérisée en ce que**
le matériau du boîtier (201) est une résine de méthacrylate de méthyle-acrylonitrile-butadiène-styrène.

2. Électrode sélective d'ions selon la revendication 1, dans laquelle
le boîtier (201) et la membrane sensible (205) sont appliqués par adhésion l'un à l'autre à l'intérieur du boîtier (201).

3. Électrode sélective d'ions (101) selon la revendication 1, dans laquelle
le matériau de base est un du chlorure de polyvinyle.

4. Dispositif de détermination de concentration d'électrolyte comprenant l'électrode sélective d'ions (101) selon la revendication 1.

5. Électrode sélective d'ions selon la revendication 1, dans laquelle
le boîtier a un paramètre de solubilité (valeur SP) de 20,6 à 21,1 MPa^{1/2}.
